# EUROPÄISCHE PATENTSCHRIFT

(11) **EP 4 168 233 B1**
(45) Veröffentlichungstag und Bekanntmachung des Hinweises auf die Patenterteilung: **28.08.2024**
(21) Anmeldenummer: 21733408.5
(22) Anmeldetag: 10.06.2021
(51) Int. Cl.: B29C 45/27, B29C 45/28

(54) **HEISSKANALDÜSE ZUR SEITENANSPRITZUNG**
HOT RUNNER NOZZLE FOR SIDE INJECTION
BUSE À COURANT CHAUD À L'INJECTION LATÉRALE

(30) Priorität: 17.06.2020 DE 102020115942
(43) Veröffentlichungstag der Anmeldung: 26.04.2023
(73) Patentinhaber: EWIKON Heisskanalsysteme GmbH, 35066 Frankenberg (DE)
(72) Erfinder: BROCKHAUS, Sebastian, 35066 Frankenberg (DE); EIMEKE, Stefan, 35066 Frankenberg (DE); ZÖLZER, Norbert, 34516 Vöhl (DE)
(74) Vertreter: Specht, Peter
(86) Internationale Anmeldenummer: PCT/EP2021/065679
(87) Internationale Veröffentlichungsnummer: WO 2021/254883

(56) Entgegenhaltungen:
- EP-A1- 1 938 945
- EP-A1- 2 701 890
- EP-B1- 0 743 157
- WO-A2-2012/115614
- CN-U- 205 324 094
- DE-A1- 102009 048 368
- US-A1- 2012 118 999
- US-A1- 2018 370 103

## Beschreibung

Die Erfindung betrifft eine Heißkanaldüse zur Seitenanspritzung nach dem Oberbegriff des Anspruchs 1.

In der Kunststoff-Spritzgießtechnik besteht oft die Notwendigkeit dazu, Kunststoffteile seitlich, d.h. senkrecht oder schräg zur Entformungsrichtung anzuspritzen. Dazu werden sogenannte Heißkanaldüsen zur Seitenanspritzung, auch Seitenanspritzdüsen genannt, verwendet, die einen Düsenkörper und Spitzenelemente aufweisen. Um eine gute Temperaturführung für die Schmelze bis auf Artikeloberflächen zu erreichen, sind die Düsenspitzen bzw. die Spitzenelemente bis auf die Artikeloberfläche zu führen. Zu diesem technologischen Hintergrund seien die US 2012/0118999A1 und die WO 2010/127965 A2 genannt.

Eine gattungsgemäße Heißkanaldüse ist aus der CN205324094 U bekannt. Die Erfindung setzt ausgehend von dieser Schrift bei der Aufgabe an, diese bekannten Konstruktionen auf konstruktiv einfache Weise konstruktiv weiter zu optimieren.

Die Erfindung löst diese Aufgabe durch den Gegenstand des Anspruchs 1. Sie schafft zudem den vorteilhaften Gegenstand des Verfahrensanspruchs 24.

Vorteilhafte Ausgestaltungen der Erfindung sind den Unteransprüchen zu entnehmen.

Nach Anspruch 1 wird folgender Gegenstand geschaffen: Eine Heißkanaldüse für das seitliche Anspritzen von Kunststoffbauteilen mit einem Düsenkörper und einem Druckdeckel, wobei zwischen dem Düsenkörper und dem Druckdeckel Spitzenelemente angeordnet sind, welche jeweils in eine Ausnehmung des Düsenkörpers eingesetzt sind und jeweils von einer beweglichen Verschlussnadel mit einer Spitze durchsetzt sind, welche zumindest in einer Betriebsstellung jeweils über einen äußeren Umfangsrand des Düsenkörpers vorsteht, wobei die Verschlussnadeln an ihren von der Spitze abgewandten Enden jeweils ein Kopplungsmittel aufweisen, das mit einem Antriebsmittel zum Bewegen der Verschlussnadeln gekoppelt ist.

Dabei ist weiter vorgesehen, dass die Spitzenelemente ferner an ihren von der der jeweiligen Spitze der Verschlussnadeln abgewandten Seiten an einem zwischen den Düsenkörper und den Druckdeckel eingesetzten demontierbaren Widerlagerelement abgestützt sind.

Das solcherart separat an dem Düsenkörper montierbare und demontierbare Widerlagerelement erleichtert einerseits die Montage der Spitzenelemente und andererseits auch deren Demontage z.B. bei der Wartung. Zudem trägt es in einfacher Weise zu einer sehr guten Abstützung des jeweiligen Spitzenelementes bei, wobei dennoch ein einfacher konstruktiver Aufbau erreicht wird, bei dem die Enden der Verschlussmittel gut mit dem Antriebsmittel koppelbar sind.

Es kann nach Anspruch 1 vorgesehen sein, dass die Verschlussnadel(n) eine, zwei oder mehr der Betriebsstellungen aufweisen bzw. anfahren kann. Die Verschlussnadeln können somit vorzugsweise, um die Anschnittqualität und/oder den Schmelzefluss zu beeinflussen, in eine jeweils besonders geeignete Betriebsstellung von mehreren Betriebsstellungen verfahren werden.

Eine Beeinflussung der Betriebsstellung kann direkt über eine entsprechende Ansteuerung oder eine entsprechende Gestaltung des Antriebsmittels erfolgen.

Es kann auch vorgesehen sein, diese Ansteuerung und/oder Ausgestaltung derart vorzunehmen, dass die Verschlussnadeln während einer Öffnungs- oder Schließbewegung unterschiedliche Geschwindigkeiten aufweisen können.

Es ist insbesondere möglich, bei Einsatz eines elektrischen Antriebs, die jeweilige Verschlussnadel Nadel, sehr genau zu positionieren und die Position in einer vorgegebenen Geschwindigkeit bzw. einem Geschwindigkeitsverlauf in Abhängigkeit vom Spritzverlauf über die Spritzzeit anzufahren. Die Verschlussnadel kann im Schmelzeaustrittsbereich Einfluss auf den Schmelzedurchfluss nehmen.

Die Verschlussnadel kann durch die Steuerung auch in die Form hineinragen und auf die Oberfläche der Form zurückgezogen werden. Die Positionierung der unterschiedlichen Betriebsstellungen wird durch die Antriebsmittel der jeweiligen Verschlussnadel(n) vorgenommen, wobei die Position der Verschlussnadel(n) in einer vorgegebenen Geschwindigkeit bzw. einem Geschwindigkeitsverlauf angefahren wird.

Nach einer bevorzugten Variante, weisen die Spitzenelemente jeweils einen Wärmeleitkörper und die jeweilige sie vollständig - z.B. zu beiden Seiten hin - durchsetzende Verschlussnadel auf.

Nach einer weiteren bevorzugten Variante, weisen die Spitzenelemente ferner jeweils eine Nadeldichtungs- und -führungshülse auf, welche die jeweilige Verschlussnadel ebenfalls vollständig - z.B. zu beiden Seiten hin - durchsetzt. Diese Nadeldichtungs- und -führungshülse sorgt zum Widerlager hin für eine gute Abdichtung und für eine gute Führung der beweglichen Verschlussnadel.

Vorzugsweise kann an dem Wärmeleitungskörper ferner ein Dichthülsenabschnitt zum Abstützen des Spitzelementes an der vom Widerlagerelement abgewandten Seite an einem Werkzeug ausgebildet sein. Dieser kann mit dem Wärmeleitungskörper einstückig ausgebildet sein oder als separate Hülse zum Wärmeleitungskörper ausgebildet sein.

Dabei kann ferner vorteilhaft vorgesehen sein, dass der Dichthülsenabschnitt aus einem Material geringerer Wärmeleitfähigkeit besteht als der Wärmeleitungskörper, so dass die Wärmeleitung durch den Dichthülsenabschnitt gering gehalten werden kann. So kann der Dichthülsenabschnitt z.B. aus Titan oder einer Titanlegierung bestehen und der Wärmeleitungskörper aus Kupfer oder einer Kupferlegierung.

Es kann vorgesehen sein, dass das Widerlagerelement einen ringförmigen, quaderförmigen oder mehrkantigen Grundkörper aufweist, an dem sich unmittelbar oder mittelbar wenigstens zwei Spitzelemente abstützen.

Die Erfindung ist somit gut an geometrisch verschieden beschaffenen Heißkanaldüsen umsetzbar, wobei sie nicht auf die vorstehend beschriebenen Formen beschränkt ist.

Es kann weiter vorgesehen sein, dass die Spitzen der Verschlussnadeln über den Außenumfang des Düsenkörpers vorstehen - zumindest in einer der Funktionsstellungen, in welche die jeweilige Verschlussnadel bewegbar ist - wobei das Widerlagerelement im Wesentlichen jeweils zwischen dem Antriebsmittel und den Spitzenelementen angeordnet ist. Die Erfindung ist derart einfach und gut an geometrisch verschieden beschaffenen Heißkanaldüsen umsetzbar.

Nach einer weiteren Ausgestaltung kann zweckmäßig und vorteilhaft vorgesehen sein, dass das Widerlagerelement wenigstens einen Brückenabschnitt aufweist, wobei wenigstens ein Brückenabschnitt von einer der Verschlussnadeln durchsetzt ist, wobei das von der Spitze abgewandte Ende der Verschlussnadel durch den Brückenabschnitt vorsteht, wo das Kopplungsmittel mit dem Antriebsmittel gekoppelt ist.

Derart kann auf einfache Weise eine Kopplung der Verschlussnadel mit dem Antriebsmittel realisiert werden, ohne dass das Widerlagerelement diese Verbindung behindert.

Dabei kann nach einer weiteren Option ferner vorgesehen sein, dass der jeweilige Brückenabschnitt des ringartigen Widerlagerelements eine Stufung des Wärmeleitkörpers oder der Nadeldichtungs- und -führungshülse des jeweiligen Spitzenelementes übergreift, so dass das Spitzenelement besonders vorteilhaft abgestützt ist.

Es kann ferner vorteilhaft vorgesehen sein, dass das ringartige Widerlagerelement so ausgestaltet ist, dass es nach den Spitzenelementen montierbar ist und vor diesen demontiert wird, was die gesamte Montage und Demontage der Spitzenelemente vereinfacht.

Es ist konstruktiv einfach, wenn die Kopplungsmittel als ein- oder mehrteilige Formelemente ausgebildet sind. Diese können z.B. als Abwinklungen oder Hammerkopf ausgebildet sein, welche jeweils in das Antriebsmittel eingreifen. Die Antriebsmittel können mehrere Kulissen aufweisen in die die entsprechenden Formelemente eingreifen.

Dabei kann vorteilhaft vorgesehen sein, dass die Kulissen des ringartigen Antriebsmittels abschnittsweise oder vollständig schräg zur Bewegungsrichtung des Antriebsmittels ausgerichtet sind, um die Verschlussnadeln vor und zurück zu bewegen.

Die Kulissen können beispielswiese gerade oder gebogen ausgebildet sein. Die Kulissen können nach einer Variante als Langlöcher ausgebildet sein, sie können aber auch zu einer Seite hin geschlossen ausgebildet sein.

In Hinsicht auf die Nadeldichtungs- und -führungshülse kann vorteilhaft vorgesehen sein, dass diese in den Wärmeleitkörper eingeschraubt ist, so dass sie dort einfach und sicher befestigt ist.

Es kann sodann vorgesehen sein, dass die Nadeldichtungs- und -führungshülse mit einer Durchgangsbohrung zum abgedichteten Führen der Verschlussnadel ausgebildet ist. Dies bedeutet, das der Spalt zwischen Verschlussnadel und der Bohrung der Nadeldichtungs- und -führungshülse eng bemessen ist, so dass einerseits eine axiale Beweglichkeit der Verschlussnadel gegeben ist aber andererseits nicht in einem praktisch erheblichen Maß Schmelze durch die Nadeldichtungs- und führungshülse durchtreten kann. Die Verschlussnadel und die Nadeldichtungs- und -führungshülse weisen dazu vorzugsweise im Wesentlichen gleiche oder gleiche Wärmeausdehnungskoeffizienten auf.

Es ist sodann vorteilhaft, wenn im Wärmeleitkörper eine Bohrung ausgebildet ist, welche die Verschlussnadel durchsetzt, wobei zwischen dem der Spitze zugewandten Ende des Wärmeleitkörpers und der Nadeldichtungs- und Führungshülse ein Ringkanal um die Verschlussnadel herum ausgebildet ist, der zum Durchleiten von Schmelze ausgebildet ist. Dabei kann weiter vorgesehen sein, dass im Wärmeleitkörper wenigstens eine, zwei oder mehr schräg zum Ringkanal verlaufende Zuleitungsbohrung(en) zum Zuleiten von Schmelze aus dem Düsenkörper in den Ringkanal ausgebildet ist/sind.

Es kann weiter vorgesehen sein, dass die Nadeldichtungs- und -führungshülse in den Wärmeleitkörper eingeschraubt ist. Auf diese Weise ist sie dort einfach vormontierbar und sicher im Wärmeleitkörper gehalten.

Darüber hinaus wird eine besonders vorteilhafte Düsenhalterung geschaffen. Nach einer weiteren Variante kann vorteilhaft vorgesehen sein, dass das Widerlagerelement demontierbar ausgebildet ist und dass es vorzugsweise zur Demontage ein Demontagemittel aufweist. Derart kann das Widerlagerelement ggf. auf einfache Weise ausgetauscht werden.

Es kann auf konstruktiv vorteilhaft einfache Weise vorgesehen sein, dass das ringartige Widerlagerelement radial außerhalb eines Antriebsrings angeordnet ist, der das Antriebsmittel bildet.

Es kann nur ein einziges Widerlagerelement vorgesehen sein, so dass auch nur ein einziges Widerlagerelement zu montieren und ggf. zu demontieren ist. Dies ist aber nicht zwingend. Es kann auch vorgesehen sein, dass mehrere Widerlagerelemente zwischen den Düsenkörper und den Druckdeckel eingesetzt sind.

Es kann schließlich vorteilhaft vorgesehen sein, dass die Abstützung eines Spitzenelements an dem Widerlagerelement zwischen der Spitze der Verschlussnadel und dem Antriebsmittel angeordnet ist.

Es kann weiter vorgesehen sein, dass mit dem Antriebsmittel die jeweilige Verschlussnadel in unterschiedlichen Betriebsstellungen positionierbar ist. bzw. im Betrieb positioniert wird und/oder dass die Position der Verschlussnadel (14) in einer vorgegebenen Geschwindigkeit bzw. einem Geschwindigkeitsverlauf anfahrbar ist bzw im Betrieb angefahren wird.

Die Erfindung schafft auch ein vorteilhaftes und einfaches Verfahren zum Demontieren eines oder mehrerer Spitzenelemente einer Heißkanaldüse, mit einem Düsenkörper und einem Druckdeckel, wobei zwischen dem Düsenkörper und dem Druckdeckel die Spitzenelemente angeordnet sind, welche jeweils in eine Ausnehmung des Düsenkörpers eingesetzt sind und jeweils von einer beweglichen Verschlussnadel mit einer Spitze durchsetzt sind, welche zumindest in einer Betriebsstellung jeweils über einen äußeren Umfangsrand des Düsenkörpers vorsteht, wobei die Verschlussnadeln an ihren von der Spitze abgewandten Enden jeweils ein Kopplungsmittel aufweisen, das mit einem Antriebsmittel zum Bewegen der Verschlussnadeln gekoppelt ist, wobei das oder die Spitzenelemente an einem zwischen den Düsenkörper und den Druckdeckel eingesetzten Widerlagerelement abgestützt sind, wobei das Verfahren folgende Schritte umfasst:
100) der Druckdeckel wird demontiert;
200) nach dem Schritt 100) wird das ein- oder mehrteilige Antriebsmittel entnommen, wodurch das jeweilige Spitzenelement vom Antriebsmittel entkoppelt wird,
300) nach dem Schritt 200) wird das wenigstens eine oder es werden die mehrere Widerlagerelemente demontiert; und
400) nach dem Schritt 300) wird/werden das oder die Spitzenelemente demontiert.

Dieses Demontageverfahren ist besonders einfach, da es möglich ist, das jeweilige Spitzenelemente direkt nach einem Entfernen des ihm zugeordneten Antriebsmittels und des ihm zugeordneten Widerlagerelementes aus der Heißkanaldüse zu entfernen, um es zu wechseln.

Nachfolgend wird die Erfindung anhand von Ausführungsbeispielen unter Bezug auf die Zeichnung näher erläutert. Die Lösungen der dargestellten Figuren eignen sich besonders vorteilhaft für die in den folgenden Figuren dargestellten Düsenkörper und Spitzenelemente. Die Erfindung ist aber nicht auf diese speziellen Ausführungsformen beschränkt sondern kann im Rahmen der Ansprüche auch auf andere Weise realisiert werden. Es zeigen:
- Fig. 1a-c: in a) eine perspektivische Ansicht eines Abschnitts einer Heißkanal-vorrichtung mit Heißkanaldüse mit einem mehrteiligen Düsenkörper mit darin eingesetzten Spitzenelementen und einer Verschlussnadel nebst einer Antriebsvorrichtung für die Verschlussnadel und in b) die Anordnung aus a) ohne Druckdeckel und in c) ein Montieren eines Spitzenelementes mit einem Montagewerkzeug;
- Fig. 2: eine Sprengansicht der Elemente aus Fig. 1a;
- Fig. 3: eine Schnittansicht eines Spitzenelementes;
- Fig. 4a, b: in a) eine perspektivische Ansicht der Heißkanaldüse aus Fig.1a ohne Druckdeckel und Antriebsring aber mit einigen Spitzenelemen-ten und mit einem Widerlager- und Druckring und in b) eine Drauf-sicht auf die Anordnung aus a);
- Fig. 5a, b: die Anordnung aus Fig. 4 mit zwei Spitzenelementen ohne Druckde-ckel mit einem Antriebshebel, in a) in einer Draufsicht und in b) ge-schnitten;
- Fig. 6: einen Schnitt durch eine Heißkanaldüse nach Art der Fig. 1 und 5 an einem Werkzeug;
- Fig. 7: in a), b) und c) eine Draufsicht auf einen Abschnitt eines Druckde-ckels einer Heißkanaldüse mit einem teilgeschnitten Bereich eines Spitzelementes an einem Formnest eines Werkzeugs in drei ver-schiedenen Betriebsstellungen; und
- Fig. 8: in a) und b) eine perspektivische Ansicht und eine Sprengansicht ei-ner weiteren Heißkanaldüse.

Begriffe wie "oben" oder "unten" sind nicht einschränkend zu verstehen, sondern beziehen sich lediglich auf die jeweilige Anordnung und Ausrichtung in den Figuren.

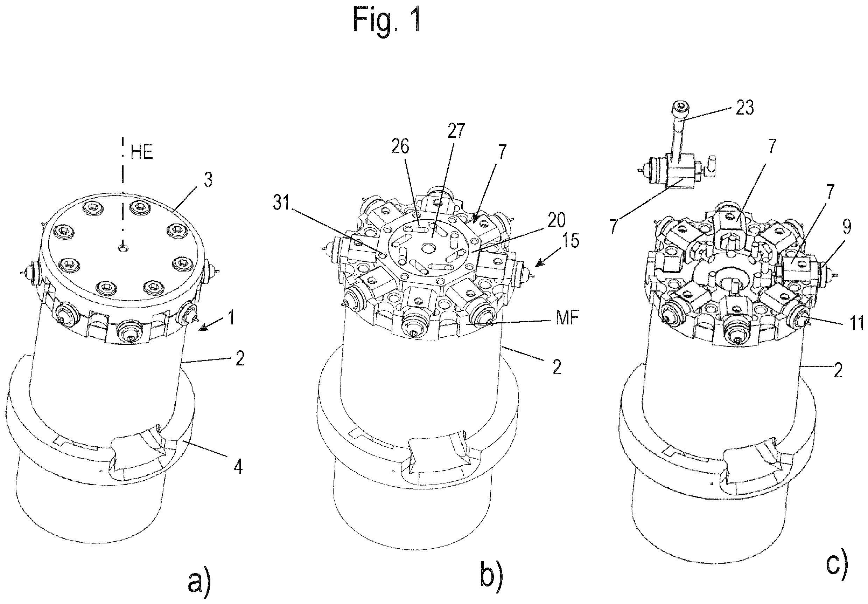

Fig. 1 zeigt einen Abschnitt einer Heißkanalvorrichtung mit einer Heißkanaldüse 1, die für ein seitliches Anspritzen von Kunststoffbauteilen ausgelegt ist.

Dazu weist die Heißkanaldüse 1 zur Seitenanspritzung einen Düsenkörper 2 auf sowie einen an dem Düsenkörper 2 lösbar befestigten Druck- bzw. Klemmdeckel 3.

Die Heißkanaldüse 1 kann ferner einen Düsenhalter 4 aufweisen, mit welchem die Heißkanaldüse bzw. deren Düsenkörper 2 an (hier nicht dargestellten) weiteren Elementen der Heißkanalvorrichtung festgelegt werden kann.

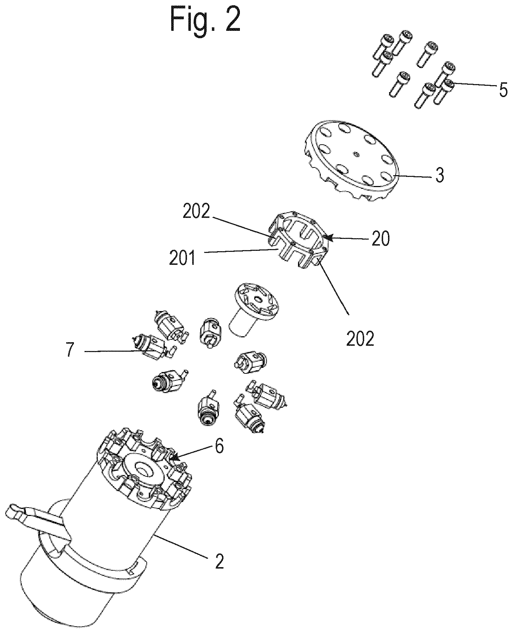

Der Druckdeckel 3 kann an dem Düsenkörper 2 mit einem Befestigungsmittel, beispielsweise ausgebildet als eine oder mehreren Schrauben 5, lösbar befestigt sein (Fig. 2).

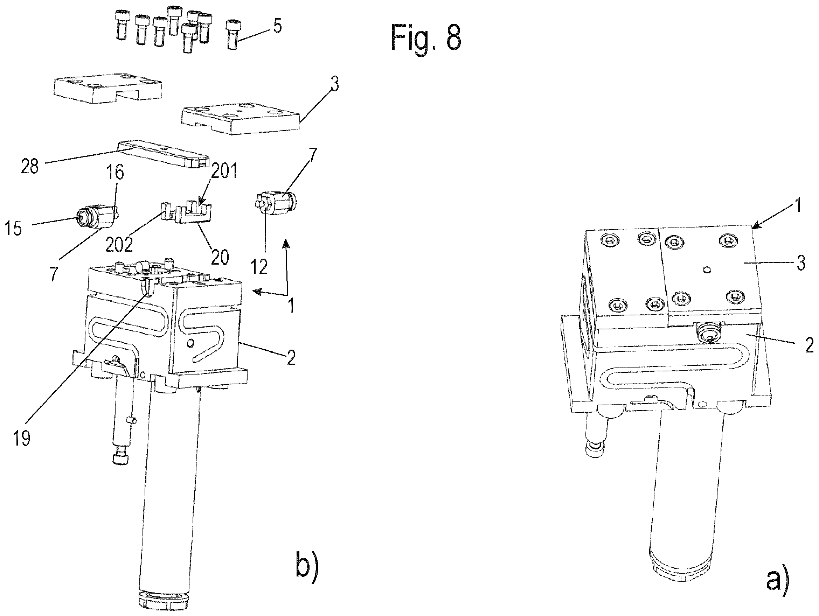

Der Düsenkörper 2 kann eine etwa zylindrische Grundform aufweisen, so dass er dann einen in etwa zylindrischen Außenmantel mit einer Mantelfläche MF hat. Ein solches Ausführungsbeispiel ist in Fig. 1 a- c dargestellt. Die Erfindung ist darauf aber nicht beschränkt. Der Düsenkörper 2 kann auch eine andere Grundform aufweisen. So ist er bei dem Ausführungsbeispiel der Fig. 8 etwa quaderförmig ausgebildet, so dass er eine entsprechend quaderförmige Mantelfläche aufweist.

Der Düsenkörper 2 weist per Definition eine Haupterstreckungsrichtung HE auf. Dies kann bei einer zylindrischen Grundform die Längsachse des Zylinders sein.

Das Anspritzen bzw. Ausspritzen von Kunststoffschmelze erfolgt seitlich, insbesondere rechtwinklig, zur Haupterstreckungsrichtung HE, was hier ferner bedeuten kann, dass das Ausspritzen des Kunststoffs genau oder in etwa senkrecht zur Mantelfläche MF erfolgt. Dabei kann mit der Heißkanaldüse 1 vorteilhaft Schmelze an mehreren Stellen der Mantelfläche MF - in Umfangsrichtung winkelversetzt - senkrecht zur Mantelfläche MF ausgestoßen werden.

Um dies zu realisieren, sind zwischen dem Düsenkörper 2 und dem Druckdeckel 3 verschiedene Funktionselemente und Funktionskonturen ausgebildet.

So weist der Düsenkörper 2 an seinem zum Druckdeckel 3 gewandten Ende eine Axialseite auf, die mit wenigstens einer oder mehreren hier beispielhaft radial an der Axialseite umfangsverteilt angeordneten Ausnehmungen 6 zum Anordnen und zur Aufnahme von Spitzenelementen 7 versehen ist. Korrespondierende Ausnehmungen sind im Druckdeckel 3 ausgebildet (hier nicht dargestellt).

In jeder der Ausnehmungen 6 ist eines der Spitzenelemente 7 angeordnet.

Die nachfolgende Beschreibung der Spitzenelemente 7 trifft auch für die weiteren Spitzenelemente der Fig. 1 bis 8 zu. Wenn zudem nachfolgend die Lage von jeweils nur einem oder an anderen Stellen mehreren der Spitzenelemente 7 beschrieben ist, versteht sich, dass diese Merkmale jeweils auch bei mehreren Spitzenelementen 7 vorhanden sein können.

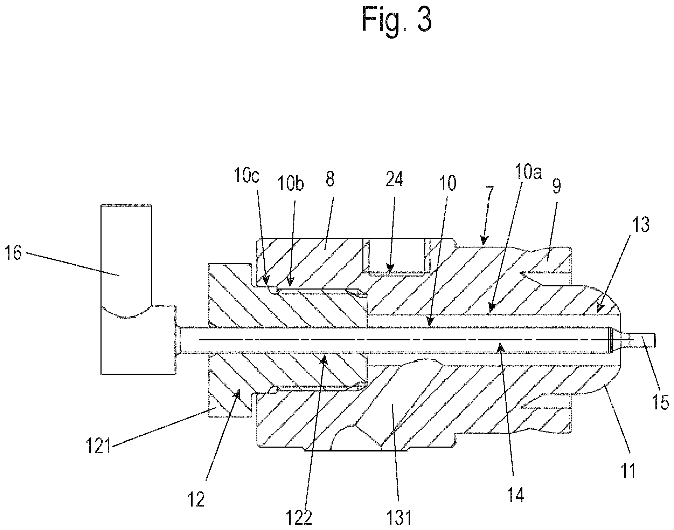

Die Spitzenelemente 7 - siehe Fig. 3 - weisen jeweils einen Wärmeleitkörper 8 (als Grundkörper) auf. Der Wärmeleitkörper 8 bildet konstruktiv auch eine Art Grundkörper des jeweiligen Spitzenelementes 7 aus.

Der Wärmeleitkörper 8 weist ferner einen Dichthülsenabschnitt 9 auf. Der Dichthülsenabschnitt 9 kann mit dem Wärmeleitkörper 8 einstückig ausgebildet sein (wie hier dargestellt) oder als dazu separates Hülsenelement (hier nicht dargestellt, siehe z.B. die WO 2010/127965 A).

Der Wärmeleitkörper 8 kann eine Art Quaderform aufweisen, wobei die einzelnen quaderförmigen Wärmeleitkörper 8 am Düsenkörper 1 (wenn der Düsenkörper zylindrisch ist) in etwa radial ausgerichtet sein können.

Jeder Wärmeleitkörper 8 kann eine ihn längs durchsetzende Bohrung 10 aufweisen. Diese Bohrung kann 10 gestuft ausgebildet sein. Die Bohrung 10 kann somit Bohrungsabschnitte 10a, b, c - hier drei - verschiedenen Durchmessers aufweisen.

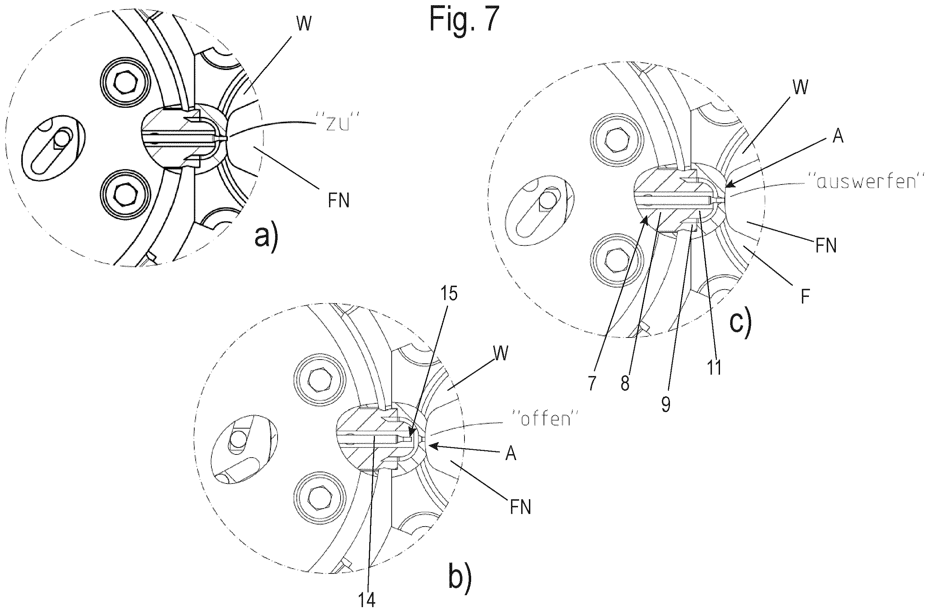

An seinem einen Ende kann der Wärmeleitkörper 8 eine Art Vorsprung 11 aufweisen. Dieser Vorsprung 11 kann zylindrisch ausgebildet sein. Er ist zu einem Werkzeug bzw. zu einem Formnest ausgerichtet (Fig. 7), berührt dieses aber vorzugsweise nicht. An seinem anderen Ende kann in den Wärmeleitkörper 8 eine Dicht- und Führungshülse 12 - nachfolgend auch synonym kurz Führungshülse 12 genannt - eingesetzt sein, die hier als eine Schraubhülse mit einer Durchgangsbohrung zum abgedichteten Führen der Verschlussnadel 14 ausgebildet ist. Die Dicht- und Führungshülse 12 kann in einen Bohrungsabschnitt 10b eingeschraubt sein, der dann ein Innengewinde aufweist.

Die jeweilige Dicht- und Führungshülse 12 kann axial aus der Bohrung 10 und somit aus dem Wärmeleitkörper 8 vorstehen. Es kann dort beispielsweise ein Mehrkantende 121 aufweisen. Die Dicht- und Führungshülse 12 weist selbst eine Durchgangsbohrung 122 auf.

Das gesamte Spitzenelement 7, also sowohl der Wärmeleitkörper 8 als auch die Dicht- und Führungshülse 12 sind axial von einer Verschlussnadel 14 durchsetzt, die zudem zu beiden Seiten hin axial aus dem Spitzenelement 7 vorsteht. Der Durchmesser der Verschlussnadel 14 und der der Durchgangsbohrung 122 sind so abgestimmt, dass die Verschlussnadel 14 in dieser Bohrung abgedichtet geführt ist.

Im Bereich des Bohrungsabschnitts 10a vor der Dicht- und Führungshülse 12 kann der Durchmesser dagegen so gewählt sein, dass rund um die Verschlussnadel 4 ein Ringkanal 13 gebildet wird, vorzugsweise konzentrisch, durch welchen Schmelze bis in den Bereich einer Spitze 15 der Verschlussnadel 14 leitbar ist, die aus dem Wärmeleitkörper 8 vorstehen kann.

In den Ringkanal 13 kann wenigstens eine schräg zum Ringkanal 14 ausgerichtete Zuleitungsbohrung 131 münden, durch welche Schmelze aus dem Düsenkörper 2 in den Ringkanal 13 leitbar ist. Es können auch mehrere solcher Zuleitungsbohrungen 131 pro Spitzenelement 7 vorgesehen sein.

Die Verschlussnadel 14, die verschieblich geführt ist, kann in wenigstens einer Betriebsposition mit einer Spitze 15 aus dem Vorsprung 11 vorstehen und kann mit einem Antriebsmittel des Antriebs vor und zurück bewegt werden.

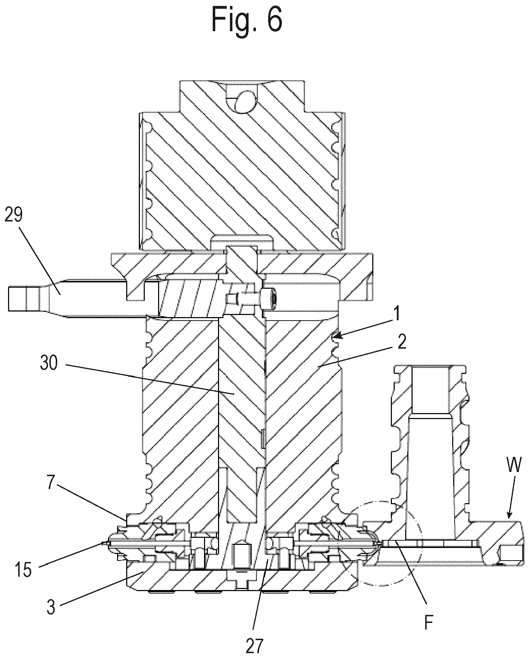

Um eine gute Temperaturführung für die Schmelze bis auf Artikeloberflächen zu erreichen, sind die Verschlussnadeln 14 mit ihrer Spitze 15 bis auf die Artikeloberfläche zu führen (Fig. 6, Fig. 7a-c). Das zu spritzende bzw. zu fertigende Kunststoffteil wird in einer Form W (nachfolgend auch Formwerkzeug genannt) gespritzt, von welcher hier u.a. eine Formplatte F dargestellt ist, die eine Anschnittbohrung A aufweist, die zu einem Formnest FN gehört. Die Anschnittbohrung A für den Kunststoff ist von der Verschlussnadel 14 verschließbar, deren Spitze in der geschlossenen Stellung der Fig. 7a die Anschnittbohrung Ader Formplatte F dicht verschließt, so dass kein Kunststoff mehr in die Form eintreten kann. In Fig. 7b ist die Verschlussnadel 14 nebst Spitze 15 zurückgezogen, so dass Schmelze die Anschnittbohrung A durchströmen kann. In Fig. 7c ist eine Auswurfstellung zum Auswerfen des Kunststoffteils dargestellt.

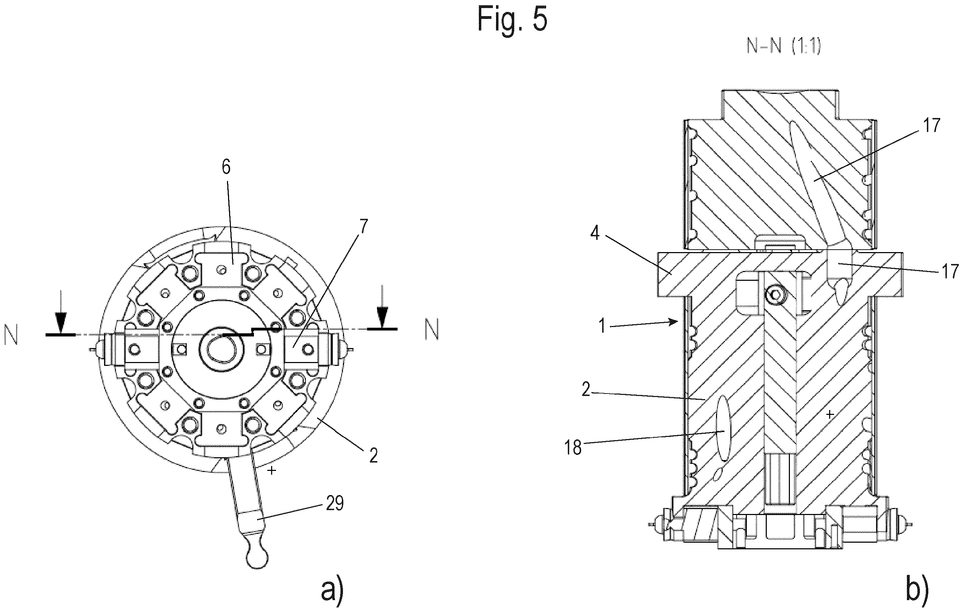

An seiner vom Druckdeckel 3 abgewandten - in Fig. 1 oberen - Axialseite weist der Düsenkörper 2 wenigstens eine Schmelze-Eintrittsöffnung in einen Schmelzekanal 17 auf (Fig.5 - hier nicht vollständig zu erkennen), der sich in Teilkanäle 18 unterteilen kann, wobei der jeweilige Teilkanal 18 in eine der schrägen Bohrungen 131 mündet, so dass durch diese Bohrung 131 Schmelze bis in den Ringkanal 13 und die Anschnittöffnung A bis in das Formnest F leitbar ist.

Um die Verschlussnadel 14 mit dem Antriebsmittel zu bewegen, weist die Verschlussnadel 14 an ihrem von der Spitze 15 abgewandten Ende, das aus dem Wärmeleitkörper 8 und dem Dicht- und Führungshülse 12 an dem von der Spitze 15 abgewandten Ende vorsteht, ein Kopplungsmittel 16 zum Koppeln der Verschlussnadel 14 mit dem Antriebsmittel auf. Hier ist dieses Kopplungsmittel 16 in einfacher Weise als eine Abwinklung ausgestaltet, die sich in etwa rechtwinklig zur Haupterstreckungsrichtung der Verschlussnadel 14 erstreckt.

Der an seinem äußersten Ende den Vorsprung 11 ausbildende Wärmeleitkörper 8 des Spitzenelements 7 steht über den Umfangsrand des Düsenkörpers 2 radial nach außen vor.

Die Spitzenelemente 7 sind derart ausgestaltet, dass sie nach einem Einlegen in die Ausnehmungen 6 seitlich durch Abschnitte einer radial äußeren Umfangswandung 19, welche jeweils von dem Vorsprung 11 und der Dichthülse 9 des jeweiligen Spitzelementes 7 durchsetzt sein kann und durch ein hinteres Widerlagerelement 20 in einer oder mehreren Richtungen zumindest im heißen Zustand gehalten sind.

Seitlich können die Spitzenelemente durch weitere Wandungen 21, 22 der Ausnehmungen 6 gehalten sein. Nach oben und unten hin sind sie vom Düsenkörper 2 und vom Druckdeckel 3 gehalten.

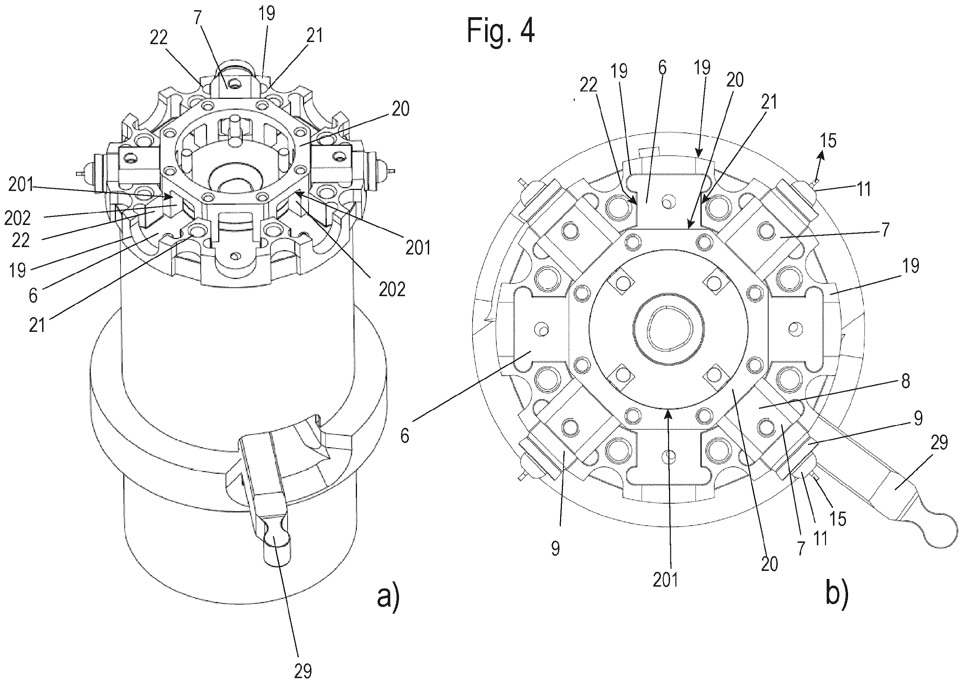

Die Dichthülse 9 stützt sich ferner an dem Formwerkzeug W ab (siehe Fig. 4, Fig. 7c).

Im heißen Zustand ist das jeweilige Spitzenelement derart zwischen dem Werkzeug und dem Widerlagerelement 20 abgestützt.

Dabei sind die Spitzenelemente 7 im kalten Zustand mit etwas Spiel in die Ausnehmungen 6 einsetzbar, beispielsweise mit einem Werkzeug wie einer Schraube 23 (Fig. 1c), die in eine Gewindebohrung 24 der Spitzenelemente einschraubbar ist und nach dem Einsetzen lösbar ist. Im erhitzten Zustand sitzen die Spitzenelemente dann sicher in diesen Ausnehmungen 6, wobei sich ein fester Sitz des Wärmeleitkörpers 8 zwischen dem Widerlagerelement 20 und dem Werkzeug ergibt, an dem sich der Dichthülsenabschnitt 9 abstützt.

Das Widerlagerelement 20 kann derart ausgestaltet sein, dass es in den Düsenkörper 2 einsetzbar und aus diesem entfernbar ist. Das Widerlagerelement 20 kann insbesondere jeweils pro Spitzenelement 20 eine Art u-förmigen Brückenabschnitt 201 bilden. Das Widerlagerelement kann zum Demontieren ein Demontagemittel aufweisen. Dieses kann als wenigstens eine Gewindebohrung 31 ausgestaltet sein, in welche eine Schraube oder dgl. eindrehbar ist, mit welcher das Widerlagerelement dann entfernt werden kann (siehe Fig. 1 b)). Derart kann das Widerlagerelement ggf. auf einfache Weise ausgetauscht werden.

Der jeweilige Brückenabschnitt 201 kann nach Fig. 1 das Spitzenelement 7 von oben aus der Richtung des Druckdeckels 3 - beispielsweise im Bereich des jeweiligen Mehrkantende oder im Bereich einer Stufung oder dgl. - übergreifen und sichert es nach dem Aufsetzen des Druckdeckels in der Haupterstreckungsrichtung HE und vorzugsweise senkrecht dazu z.B. radial nach innen hin.

Die derart ringsum für die umfangsverteilten Spitzenelemente 7 erforderlichen U-förmigen Brückenabschnitte 201 können zu einem übergreifenden Element zusammengefasst sein. Nach den Fig. 1 bis 7 ist dieses mehrere Brückenabschnitte 201 aufweisende übergreifende Element ein Ring, beispielsweise ein umfangsgeschlossener Mehreckring.

Jeder Brückenabschnitt 201 übergreift dann beispielsweise das jeweilige Mehrkantenende 121 der jeweiligen Nadeldichtungs- und -führungshülse 12. Untere Stege 202 der Brückenabschnitte 201 können an einem Bund 25 (Fig. 4a) oder in Ausnehmungen 6 oder dgl. am Düsenkörper 2 gehalten sein, derart, dass das Widerlagerelement 20 dort sicher abgestützt ist.

Derart sind die Spitzenelemente 7 gut montierbar, woraufhin zunächst diese (Fig. 1c) und dann das Widerlagerelement 20, hier das ringartige Widerlagerelement 20, montiert wird.

In diesem Zustand sind dann die Spitzenelemente 7 durch den Druckdeckel 3 in Richtung einer Haupterstreckungsrichtung HE an den Düsenkörper 2 angepresst, wobei sich eine Fläche des Spitzenelements 7 wenigstens im aufgeheizten Zustand der Heißkanaldüse an einem Steg 202 des Widerlagerelementes 20 abstützen kann. Dabei ist auch vorgesehen, dass die Abstützung eines Spitzenelements 7 an dem Widerlagerelement 20 zwischen der Spitze 15 der Verschlussnadel 14 und dem Antriebsmittel 28, 29 angeordnet ist.

Die Kopplungsmittel 16 der Verschlussnadeln 14, beispielsweise die Abwinklungen, können in Kulissen 26 eines Antriebsmittels, hier eines drehbaren Antriebsringes 27 eingreifen, der mit einem Antrieb drehbar ist. Dazu kann der Antriebsring 27 beispielsweise mit einer Welle 30 (Fig. 6) gekoppelt sein, die mit einem Antriebshebel 29 verbunden ist, der über einen ansonsten hier nicht dargestellten Motor oder dgl. bewegbar ist, beispielsweise in und gegen die Umfangsrichtung verschwenkbar ist.

Der Antriebsring 27 kann radial innerhalb des in Fig. 1 ringartigen Widerlagerelementes 20 liegen. Durch Drehen des Antriebsringes 27 mit den Kulissen 26, die schräg zur Umfangsrichtung ausgerichtet sind, können die Verschlussnadeln 14 dann gemeinsam einfach vor- und zurückbewegt werden, um die Anschnittbohrungen A zu öffnen oder zu verschließen.

Die Kulissen 26 können als gerade Langlöcher ausgebildet sein in welche die Abwinklungen eingreifen oder auch in anderer Form.

Diese Art des Antriebs ist vorteilhaft. Es kann aber auch eine andere Art des Antriebs gewählt werden.

Wie in sämtlichen Figuren dargestellt, kann vorteilhaft vorgesehen sein, dass die Abstützung eines Spitzenelements 7 an dem Widerlagerelement 20 zwischen der Spitze 15 der Verschlussnadel 14 und dem Antriebsmittel 28,29 angeordnet ist.

Bei dem Ausführungsbeispiel der Fig. 8 ist der Düsenkörper 2 quaderförmig ausgebildet. Der Druckdeckel 3 kann entsprechend mehreckig geformt sein. Er besteht hier aus zwei Teilen. Er kann wiederum an dem Düsenkörper 2 mit Befestigungsmitteln wie Schrauben 5 festlegbar sein (Fig. 8 b)

Im Düsenkörper 2 sind wieder Ausnehmungen 6 für Spitzenelemente 7 ausgebildet. Die Spitzenelemente 7 können nach Art der Fig. 3 ausgebildet sein. Die Ausnehmungen 6 können nach Art der Ausnehmungen 6 der Fig. 1 beschaffen sein.

Das Antriebsmittel kann hier nicht als drehbarer Ring sondern als linear bewegbare Antriebsleiste 28 ausgebildet ein, die (hier nicht sichtbare) Kulissen aufweist, in welche die Kopplungsmittel 16 eingreifen, wobei die Kulissen so ausgestaltet sein können, dass die Verschlussnadeln 14 beim linearen Bewegen der Antriebsleiste 28 vor- und zurückbewegt werden.

Die Antriebleiste 28 kann von einem ansonsten hier nicht dargestellten Antrieb bewegbar sein.

Die Spitzenelemente 7 können bei dem Ausführungsbeispiel der Fig. 8 z.B. derart ausgerichtet sein, dass zu gegenüberliegenden Seiten des Düsenkörpers 2 hin je eines oder mehrere der Spitzenelemente 7 vorgesehen sind, die in entgegengesetzte Richtungen weisen.

Die Ausnehmungen 6 können analog zu den Ausnehmungen der Fig. 1 bis 7 gestaltet sein. Dies bedeutet, es gibt jeweils eine zum Formwerkzeug W gerichtete vordere Wandung 19 und seitliche Wandungen 21, 22. Das Widerlagerelement kann wiederum einen oder mehrere Brückenabschnitte 201 aufweisen. Hier sind beispielhaft zwei der Brückenabschnitte zu einem Widerlagerelement 20 zusammengefasst. Dieses kann in den Düsenkörper 2 eingesetzt werden. Es bildet ein Widerlager für die jeweiligen Spitzenelemente 7, die sich in entgegengesetzter Richtung wiederum an einem Werkzeug abstützen können.

**Bezugszeichenliste**

| | |
|---|---|
| Heißkanaldüse | 1 |
| Düsenkörper | 2 |
| Druckdeckel | 3 |
| Düsenhalter | 4 |
| Schrauben | 5 |
| Ausnehmungen | 6 |
| Spitzenelemente | 7 |
| Wärmeleitkörper | 8 |
| Dichthülsenabschnitt | 9 |
| Bohrung | 10 |
| Bohrungsabschnitte | 10a, b, c |
| Vorsprung | 11 |
| Nadeldichtungs- und -führungshülse | 12 |
| Mehrkantende | 121 |
| Durchgangsbohrung | 122 |
| Ringkanal | 13 |
| Zuleitungsbohrung | 131 |
| Verschlussnadel | 14 |
| Spitze | 15 |
| Kopplungsmittel | 16 |
| Schmelzekanal | 17 |
| Teilkanal | 18 |
| Wandung | 19 |
| Widerlagerelement | 20 |
| Brückenabschnitte | 201 |
| Stege | 202 |
| Wandung | 21, 22 |
| Schraube | 23 |
| Gewindebohrung | 24 |
| Bund | 25 |
| Kulissen | 26 |
| Antriebsring | 27 |
| Antriebsleiste | 28 |
| Antriebshebel | 29 |
| Welle | 30 |
| Demontagemittel | 31 |
| Haupterstreckungsrichtung | HE |
| Anschnittbohrung | A |
| Formplatte | F |
| Formwerkzeug | W |
| Formnest | FN |
| Mantelfläche | MF |

## Patentansprüche

1. Heißkanaldüse für das seitliche Anspritzen von Kunststoffbauteilen mit einem Düsenkörper (2) und einem Druckdeckel (3), wobei zwischen dem Düsenkörper (2) und dem Druckdeckel (3) Spitzenelemente (7) angeordnet sind, welche jeweils in eine Ausnehmung (6) des Düsenkörpers (2) eingesetzt sind und jeweils von einer beweglichen Verschlussnadel (14) mit einer Spitze (15) durchsetzt sind, welche zumindest in einer Betriebsstellung jeweils über einen äußeren Umfangsrand des Düsenkörpers vorsteht, wobei die Verschlussnadeln (14) an ihren von der Spitze (15) abgewandten Enden jeweils ein Kopplungsmittel (16) aufweisen, das mit einem Antriebsmittel (28, 29) zum Bewegen der Verschlussnadeln (14) gekoppelt ist, **dadurch gekennzeichnet, dass** die Spitzenelemente (7) ferner an ihren von der der jeweiligen Spitze (15) der Verschlussnadeln (14) abgewandten Seiten an einem zwischen den Düsenkörper (2) und den Druckdeckel (3) eingesetzten Widerlagerelement (20) abgestützt sind und dass das Widerlagerelement (20) demontierbar ausgebildet ist..

2. Heißkanaldüse nach Anspruch 1, **dadurch gekennzeichnet, dass** die Spitzenelemente (7) jeweils einen Wärmeleitkörper (8) und die jeweilige sie vollständig durchsetzende Verschlussnadel (14) aufweisen.

3. Heißkanaldüse nach Anspruch 2, **dadurch gekennzeichnet, dass** die Spitzenelemente (7) ferner eine Nadeldichtungs- und -führungshülse (12) aufweisen, welche die jeweilige Verschlussnadel (14) ebenfalls vollständig durchsetzt.

4. Heißkanaldüse nach einem der vorstehenden Ansprüche, **dadurch gekennzeichnet, dass** das Widerlagerelement (20) zur Demontage ein Demontagemittel (31) aufweist.

5. Heißkanaldüse nach einem der vorstehenden Ansprüche, **dadurch gekennzeichnet, dass** an dem Wärmeleitungskörper (8) ferner ein Dichthülsenabschnitt (9) zum Abstützen des Spitzelementes an der vom Widerlagerelement (20) abgewandten Seite an einem Werkzeug ausgebildet ist, der mit dem Wärmeleitungskörper einstückig ausgebildet ist oder der als separate Hülse zum Wärmeleitungskörper ausgebildet ist.

6. Heißkanaldüse nach Anspruch 5, **dadurch gekennzeichnet, dass** der Dichthülsenabschnitt (9) aus einem Material geringerer Wärmeleitfähigkeit besteht als der Wärmeleitungskörper.

7. Heißkanaldüse nach einem der vorstehenden Ansprüche, **dadurch gekennzeichnet, dass** der Düsenkörper (2) zylindrisch oder mehreckig ist und dass am Außenumfang des Düsenkörpers (2) zwei oder mehr der Spitzenelemente (7) verteilt sind, wobei das Widerlagerelement (20) im Wesentlichen jeweils zwischen dem Antriebsmittel (28, 29) und den Spitzenelementen (7) angeordnet ist.

8. Heißkanaldüse nach einem oder mehreren der vorstehenden Ansprüche, **dadurch gekennzeichnet, dass** das Widerlagerelement (20) wenigstens einen Brückenabschnitt (201) aufweist, wobei wenigstens ein Brückenabschnitt (201) von einer der Verschlussnadeln (14) durchsetzt ist, wobei das von der Spitze (15) abgewandte Ende der Verschlussnadel (14) durch den Brückenabschnitt (201) vorsteht, wo das Kopplungsmittel (16) mit dem Antriebsmittel (28, 29) gekoppelt ist.

9. Heißkanaldüse nach einem oder mehreren der vorstehenden Ansprüche, **dadurch gekennzeichnet, dass** der Brückenabschnitt (201) des Widerlagerelements (20) eine Stufung des Wärmeleitkörpers (8) oder der Nadeldichtungs- und -führungshülse (12) des jeweiligen Spitzenelementes (7) übergreift.

10. Heißkanaldüse nach einem oder mehreren der vorstehenden Ansprüche, **dadurch gekennzeichnet, dass** das Widerlagerelement (20) derart ausgestaltet ist, dass es zeitlich nach den Spitzenelementen (7) montierbar ist und vor diesen demontierbar ist.

11. Heißkanaldüse nach einem oder mehreren der vorstehenden Ansprüche, **dadurch gekennzeichnet, dass** die Kopplungsmittel (16) als einteiliges oder mehrteiliges Formelement ausgebildet sind, welche jeweils in eine von mehreren Kulissen (26) des Antriebsmittels (28, 29) eingreifen.

12. Heißkanaldüse nach einem oder mehreren der vorstehenden Ansprüche, **dadurch gekennzeichnet, dass** die Kulissen (26) des Antriebsmittels abschnittsweise oder vollständig schräg oder bogenförmig zur Bewegungsrichtung des Antriebsmittels ausgerichtet sind.

13. Heißkanaldüse nach einem der vorstehenden Ansprüche, **dadurch gekennzeichnet, dass** die Nadeldichtungs- und -führungshülse (12) in den Wärmeleitkörper (8) eingeschraubt ist.

14. Heißkanaldüse nach einem der vorstehenden Ansprüche, **dadurch gekennzeichnet, dass** die Nadeldichtungs- und -führungshülse (12) mit einer Durchgangsbohrung (122) zum abgedichteten Führen der Verschlussnadel (14) ausgebildet ist.

15. Heißkanaldüse nach einem der vorstehenden Ansprüche, **dadurch gekennzeichnet, dass** im Wärmeleitkörper (8) eine Bohrung (10) ausgebildet ist, welche die Verschlussnadel (14) durchsetzt, wobei zwischen dem der Spitze (15) zugewandten Ende des Wärmeleitkörpers (8) und der Nadeldichtungs- und Führungshülse (12) ein Ringkanal (13) um die Verschlussnadel (14) herum ausgebildet ist, der zum Durchleiten von Schmelze ausgebildet ist.

16. Heißkanaldüse nach einem der vorstehenden Ansprüche, **dadurch gekennzeichnet, dass** im Wärmeleitkörper (8) wenigstens eine, zwei oder mehr schräg zum Ringkanal (13) verlaufende Zuleitungsbohrung(en) (131) zum Zuleiten von Schmelze aus dem Düsenkörper (2) in den Ringkanal (13) ausgebildet ist/sind.

17. Heißkanaldüse nach einem der vorstehenden Ansprüche, **dadurch gekennzeichnet, dass** die Spitzenelemente (7) durch den Druckdeckel (3) in Richtung einer Haupterstreckungsrichtung (HE) an den Düsenkörper (2) angepresst werden und wobei sich eine Fläche des Spitzenelements (7) wenigstens im aufgeheizten Zustand der Heißkanaldüse an einem Steg (202) des Widerlagerelementes (20) abstützt.

18. Heißkanaldüse nach einem der vorstehenden Ansprüche, **dadurch gekennzeichnet, dass** der Druckdeckel (3) das separate Widerlagerelement (20) im montierten Zustand gegen ein unzulässiges Verschieben in die Haupterstreckungsrichtung (HE) sichert.

19. Heißkanaldüse nach einem der vorstehenden Ansprüche, **dadurch gekennzeichnet, dass** das Widerlagerelement (20) einen ringförmigen, quaderförmigen oder mehrkantigen Grundkörper aufweist, an dem sich unmittelbar oder mittelbar wenigstens zwei Spitzelemente (7) abstützen.

20. Heißkanaldüse nach einem der vorstehenden Ansprüche, **dadurch gekennzeichnet, dass** mehrere Widerlagerelemente (20) zwischen dem Düsenkörper (2) und dem Druckdeckel (3) eingesetzt sind.

21. Heißkanaldüse nach einem der vorstehenden Ansprüche, **dadurch gekennzeichnet, dass** die Abstützung eines Spitzenelements (7) an dem Widerlagerelement (20) zwischen der Spitze (15) der Verschlussnadel (14) und dem Antriebsmittel (28,29) angeordnet ist.

22. Heißkanaldüse nach einem der vorstehenden Ansprüche, **dadurch gekennzeichnet, dass** mit dem Antriebsmittel (28, 29) die jeweilige Verschlussnadel (14) in unterschiedlichen Betriebsstellungen positionierbar ist.

23. Heißkanaldüse nach einem der vorstehenden Ansprüche, **dadurch gekennzeichnet, dass** mit dem Antriebsmittel (28, 29) die jeweilige Verschlussnadel (14) in unterschiedlichen Betriebsstellungen positionierbar ist. und die Position der Verschlussnadel (14) in einer vorgegebenen Geschwindigkeit bzw. einem Geschwindigkeitsverlauf anfahrbar ist.

24. Verfahren zum Demontieren eines oder mehrerer Spitzenelemente (7) einer Heißkanaldüse, mit einem Düsenkörper (2) und einem Druckdeckel (3), wobei zwischen dem Düsenkörper (2) und dem Druckdeckel (3) das oder die Spitzenelemente (7) angeordnet sind, welche jeweils in eine Ausnehmung (6) des Düsenkörpers (2) eingesetzt sind und jeweils von einer beweglichen Verschlussnadel (14) mit einer Spitze (15) durchsetzt sind, welche zumindest in einer Betriebsstellung jeweils über einen äußeren Umfangsrand des Düsenkörpers vorsteht, wobei die Verschlussnadeln (14) an ihren von der Spitze (15) abgewandten Enden jeweils ein Kopplungsmittel (16) aufweisen, das mit einem Antriebsmittel (28, 29) zum Bewegen der Verschlussnadeln (14) gekoppelt ist, wobei das oder die Spitzenelemente (7) an einem zwischen den Düsenkörper (2) und den Druckdeckel (3) eingesetzten Widerlagerelement (20) abgestützt sind, **gekennzeichnet durch** folgende Schritte:
100) der Druckdeckel (2) wird demontiert;
200) nach dem Schritt 100) wird das ein- oder mehrteilige Antriebsmittel (28, 29) entnommen, wodurch das jeweilige Spitzenelement (7) vom Antriebsmittel entkoppelt wird,
300) nach dem Schritt 200) wird das wenigstens eine oder es werden die mehrere Widerlagerelemente (20) demontiert; und
400) nach dem Schritt 300) wird/werden das oder die Spitzenelemente (7) demontiert.

## Claims

1. A hot runner nozzle for the lateral gating of plastic components having a nozzle body (2) and a pressure lid (3), wherein tip elements (7) are arranged between the nozzle body (2) and the pressure lid (3), which are each inserted into a recess (6) of the nozzle body (2) and are each penetrated by a movable closure needle (14) having a tip (15), which in at least one operating position protrudes in each case over an outer circumferential edge of the nozzle body, wherein the closure needles (14) each include, on their ends facing away from the tip (15), a coupling means (16), which is coupled to a drive means (28, 29) for moving the closure needles (14), **characterized in that** the tip elements (7) are furthermore supported on their side facing away from the respective tip (15) of the closure needles (14) on a buttress element (20) inserted between the nozzle body (2) and the pressure lid (3), and **in that** the buttress element (20) is designed to be removable..

2. The hot runner nozzle according to Claim 1, **characterized in that** the tip elements (7) each include a heat conduction body (8) and the respective closure needle (14) completely penetrating it.

3. The hot runner nozzle according to Claim 2, **characterized in that** the tip elements (7) furthermore include a needle seal and guide sleeve (12), which the respective closure needle (14) also completely penetrates.

4. The hot runner nozzle according to any one of the preceding claims, **characterized in that** the buttress element (20) includes a removal means (31) for the removal.

5. The hot runner nozzle according to any one of the preceding claims, **characterized in that** furthermore a seal sleeve section (9) is formed on the heat conduction body (8) for supporting the tip element on the side facing away from the buttress element (20) on a tool, which is integrally formed with the heat conduction body or is formed as a separate sleeve from the heat conduction body.

6. The hot runner nozzle according to Claim 6, **characterized in that** the seal sleeve section (9) consists of a material of lower thermal conductivity than the heat conduction body.

7. The hot runner nozzle according to any one of the preceding claims, **characterized in that** the nozzle body (2) is cylindrical or polygonal, and two or more of the tip elements (7) are distributed on the outer circumference of the nozzle body (2), wherein the buttress element (20) is essentially arranged in each case between the drive means (28, 29) and the tip elements (7).

8. The hot runner nozzle according to one or more of the preceding claims, **characterized in that** the buttress element (20) includes at least one bridge section (201), wherein at least one bridge section (201) is penetrated by one of the closure needles (14), wherein the end of the closure needle (14) facing away from the tip (15) protrudes through the bridge section (201), where the coupling means (16) is coupled with the drive means (28, 29).

9. The hot runner nozzle according to one or more of the preceding claims, **characterized in that** the bridge section (201) of the buttress element (20) overlaps a step of the heat conduction body (8) or the needle seal and guide sleeve (12) of the respective tip element (7).

10. The hot runner nozzle according to one or more of the preceding claims, **characterized in that** the buttress element (20) is designed in such a way that it is installable after the tip elements (7) with respect to time and is removable before them.

11. The hot runner nozzle according to one or more of the preceding claims, **characterized in that** the coupling means (16) are designed as a one-part or multipart shaped element, which each engage in one of multiple slotted guides (26) of the drive means (28, 29).

12. The hot runner nozzle according to one or more of the preceding claims, **characterized in that** the slotted guides (26) of the drive means are oriented in sections or completely obliquely or in a curve in relation to the movement direction of the drive means.

13. The hot runner nozzle according to any one of the preceding claims, **characterized in that** the needle seal and guide sleeve (12) is screwed into the heat conduction body (8).

14. The hot runner nozzle according to any one of the preceding claims, **characterized in that** the needle seal and guide sleeve (12) is formed having a through hole (122) for the sealed guiding of the closure needle (14).

15. The hot runner nozzle according to any one of the preceding claims, **characterized in that** a hole (10) is formed in the heat conduction body (8), which the closure needle (14) penetrates, wherein a ring channel (13), which is designed to conduct through melt, is formed around the closure needle (14) between the end of the heat conduction body (8) facing toward the tip (15) and the needle seal and guide sleeve (12).

16. The hot runner nozzle according to any one of the preceding claims, **characterized in that** at least one, two, or more feed hole(s) (131) extending obliquely to the ring channel (13) is/are formed in the heat conduction body (8) to feed melt from the nozzle body (2) into the ring channel (13).

17. The hot runner nozzle according to any one of the preceding claims, **characterized in that** the tip elements (7) are pressed by the pressure lid (3) in the direction of a main extension direction (HE) on the nozzle body (2) and wherein a surface of the tip element (7) at least in the heated state of the hot runner nozzle supports itself on a web (202) of the buttress element (20).

18. The hot runner nozzle according to any one of the preceding claims, **characterized in that** the pressure lid (3) secures the separate buttress element (20) in the installed state against impermissible displacement in the main extension direction (HE).

19. The hot runner nozzle according to any one of the preceding claims, **characterized in that** the buttress element (20) includes a ring-shaped, cuboid, or polygonal base body, on which at least two tip elements (7) support themselves directly or indirectly.

20. The hot runner nozzle according to any one of the preceding claims, **characterized in that** multiple buttress elements (20) are inserted between the nozzle body (2) and the pressure lid (3).

21. The hot runner nozzle according to any one of the preceding claims, **characterized in that** the support of a tip element (7) on the buttress element (20) is arranged between the tip (15) of the closure needle (14) and the drive means (28, 29).

22. The hot runner nozzle according to any one of the preceding claims, **characterized in that**, using the drive means (28, 29), the respective closure needle (14) is positionable in different operating positions.

23. The hot runner nozzle according to any one of the preceding claims, **characterized in that**, using the drive means (28, 29), the respective closure needle (14) is positionable in different operating positions and the position of the closure needle (14) is approachable at a predetermined speed or a speed curve.

24. The method for removing one or more tip elements (7) of a hot runner nozzle, having a nozzle body (2) and a pressure lid (3), wherein the tip element or elements (7) are arranged between the nozzle body (2) and the pressure lid (3), which are each inserted into a recess (6) of the nozzle body (2) and are each penetrated by a movable closure needle (14) having a tip (15), each of which protrudes in at least one operating position beyond an outer circumferential edge of the nozzle body, wherein the closure needles (14) each have, on their ends facing away from the tip (15), a coupling means (16), which is coupled with a drive means (28, 29) for moving the closure needles (14), wherein the tip element or elements (7) are supported on a buttress element (20) inserted between the nozzle body (2) and the pressure lid (3), **characterized by** the following steps:
100) the pressure lid (2) is removed;
200) after step 100), the one-part or multipart drive means (28, 29) is removed, whereby the respective tip element (7) is decoupled from the drive means,
300) after step 200), the at least one buttress element is or the multiple buttress elements (20) are removed; and
400) after step 300) the tip element or elements (7) is/are removed.

## Revendications

1. Buse de canal chaud pour le moulage par injection latérale de pièces en plastique, avec un corps de buse (2) et un couvercle résistant à la pression (3), dans lequel sont disposés, entre le corps de buse (2) et le couvercle résistant à la pression (3), des éléments en pointe (7) qui sont insérés chacun dans un creux (6) du corps de buse (2) et sont traversés chacun par une aiguille d'obturation (14) mobile dotée d'une pointe (15) qui dépasse, au moins dans une position de fonctionnement, au-delà d'un bord périphérique extérieur du corps de buse, les aiguilles d'obturation (14) présentant chacune, à leur extrémité opposée à la pointe (15), un moyen de couplage (16) qui est couplé à un moyen d'entraînement (28, 29) pour le déplacement des aiguilles d'obturation (14), **caractérisée en ce que** les éléments en pointe (7) s'appuient en outre, sur leurs côtés opposés à la pointe (15) des aiguilles d'obturation (14), sur un élément formant contre-appui (20) inséré entre le corps de buse (2) et le couvercle résistant à la pression (3) et **en ce que** l'élément formant contre-appui (20) est démontable.

2. Buse de canal chaud selon la revendication 1, **caractérisée en ce que** les éléments en pointe (7) comportent chacun un corps conducteur thermique (8) et l'aiguille d'obturation (14) qui les traverse entièrement.

3. Buse de canal chaud selon la revendication 2, **caractérisée en ce que** les éléments en pointe (7) comportent en outre une douille d'étanchéité et de guidage d'aiguille (12) que l'aiguille d'obturation (14) correspondante traverse aussi entièrement.

4. Buse de canal chaud selon l'une des revendications précédentes, **caractérisée en ce que** l'élément formant contre-appui (20) présente un moyen de démontage (31) pour le démontage.

5. Buse de canal chaud selon l'une des revendications précédentes, **caractérisée en ce qu'**est en outre formée sur le corps conducteur thermique (8) une section de douille d'étanchéité (9) pour l'appui de l'élément en pointe, sur le côté opposé de l'élément formant contre-appui (20), sur un outil qui est formé d'un seul tenant avec le corps conducteur thermique ou comme une douille séparée du corps conducteur thermique.

6. Buse de canal chaud selon la revendication 5, **caractérisée en ce que** la section de douille d'étanchéité (9) est faite d'un matériau ayant une conductibilité thermique inférieure à celle du corps conducteur thermique.

7. Buse de canal chaud selon l'une des revendications précédentes, **caractérisée en ce que** le corps de buse (2) est cylindrique ou polygonal et **en ce que** deux ou plusieurs des éléments en pointe (7) sont répartis sur la circonférence extérieure du corps de buse (2), l'élément formant contre-appui (20) étant pour l'essentiel disposé entre le moyen d'entraînement (28, 29) et les éléments en pointe (7).

8. Buse de canal chaud selon une ou plusieurs des revendications précédentes, **caractérisée en ce que** l'élément formant contre-appui (20) comporte au moins une section en pont (201), laquelle au moins une section en pont (201) est traversée par une des aiguilles d'obturation (14), l'extrémité opposée à la pointe (15) de l'aiguille d'obturation (14) dépassant de la section en pont (201) là où le moyen de couplage (16) est couplé avec le moyen d'entraînement (28, 29).

9. Buse de canal chaud selon une ou plusieurs des revendications précédentes, **caractérisée en ce que** la section en pont (201) de l'élément formant contre-appui (20) passe par-dessus un gradin du corps conducteur thermique (8) ou de la douille d'étanchéité et de guidage d'aiguille (12) de chaque élément en pointe (7).

10. Buse de canal chaud selon une ou plusieurs des revendications précédentes, **caractérisée en ce que** l'élément formant contre-appui (20) est conformé de façon à pouvoir être monté après les éléments en pointe (7) et démonté avant ceux-ci dans l'ordre chronologique.

11. Buse de canal chaud selon une ou plusieurs des revendications précédentes, **caractérisée en ce que** les moyens de couplage (16) sont conformés comme un élément moulé en une ou plusieurs parties qui se met en prise dans une de plusieurs glissières (26) du moyen d'entraînement (28, 29).

12. Buse de canal chaud selon une ou plusieurs des revendications précédentes, **caractérisée en ce que** les glissières (26) du moyen d'entraînement sont orientées en partie ou complètement à l'oblique ou en arc de cercle par rapport au sens de déplacement du moyen d'entraînement.

13. Buse de canal chaud selon l'une des revendications précédentes, **caractérisée en ce que** la douille d'étanchéité et de guidage d'aiguille (12) est vissée dans le corps conducteur thermique (8).

14. Buse de canal chaud selon l'une des revendications précédentes, **caractérisée en ce que** la douille d'étanchéité et de guidage d'aiguille (12) est munie d'un alésage traversant (122) pour le guidage étanche de l'aiguille d'obturation (14).

15. Buse de canal chaud selon l'une des revendications précédentes, **caractérisée en ce qu'**est formé dans le corps conducteur thermique (8) un alésage (10) qui traverse l'aiguille d'obturation (14), un canal annulaire (13) conçu pour l'acheminement de matière fondue étant formé autour de l'aiguille d'obturation (14) entre l'extrémité du corps conducteur thermique (8) tournée vers la pointe (15) et la douille d'étanchéité et de guidage d'aiguille (12).

16. Buse de canal chaud selon l'une des revendications précédentes, **caractérisée en ce qu'**au moins un, deux ou plusieurs alésages d'arrivée (131) sont formés dans le canal annulaire (13) dans le corps conducteur thermique (8), à l'oblique par rapport au canal annulaire (13), pour amener de la matière en fusion hors du corps de buse (2) dans le canal annulaire (13).

17. Buse de canal chaud selon l'une des revendications précédentes, **caractérisée en ce que** le couvercle résistant à la pression (3) presse les éléments en pointe (7) sur le corps de buse (2) dans un sens d'étendue principal (HE), une surface de l'élément en pointe (7) s'appuyant sur une barrette (202) de l'élément formant contre-appui (20) au moins quand la buse de canal chaud est chauffée.

18. Buse de canal chaud selon l'une des revendications précédentes, **caractérisée en ce que** le couvercle résistant à la pression (3) fixe l'élément formant contre-appui (20) séparé dans l'état monté afin d'empêcher de façon sûre son déplacement dans le sens d'étendue principal (HE).

19. Buse de canal chaud selon l'une des revendications précédentes, **caractérisée en ce que** l'élément formant contre-appui (20) comporte un corps de base annulaire, carré ou polygonal sur lequel au moins deux éléments en pointe (7) s'appuient directement ou indirectement.

20. Buse de canal chaud selon l'une des revendications précédentes, **caractérisée en ce que** plusieurs éléments formant contre-appui (20) sont insérés entre le corps de buse (2) et le couvercle résistant à la pression (3).

21. Buse de canal chaud selon l'une des revendications précédentes, **caractérisée en ce que** l'appui d'un élément en pointe (7) sur l'élément formant contre-appui (20) est disposé entre la pointe (15) de l'aiguille d'obturation (14) et le moyen d'entraînement (28,29).

22. Buse de canal chaud selon l'une des revendications précédentes, **caractérisée en ce que** chaque aiguille d'obturation (14) peut être positionnée avec le moyen d'entraînement (28, 29) dans différentes positions de fonctionnement.

23. Buse de canal chaud selon l'une des revendications précédentes, **caractérisée en ce que** chaque aiguille d'obturation (14) peut être positionnée avec le moyen d'entraînement (28, 29) dans différentes positions de fonctionnement et l'aiguille d'obturation (14) peut être amenée en position à une vitesse ou suivant une courbe de vitesse prédéterminée.

24. Procédé pour le démontage d'un ou plusieurs éléments en pointe (7) d'une buse de canal chaud avec un corps de buse (2) et un couvercle résistant à la pression (3), dans lequel sont disposés, entre le corps de buse (2) et le couvercle résistant à la pression (3), le ou les éléments en pointe (7) qui sont insérés chacun dans un creux (6) du corps de buse (2) et sont traversés chacun par une aiguille d'obturation (14) mobile dotée d'une pointe (15) qui dépasse, au moins dans une position de fonctionnement, au-delà d'un bord périphérique extérieur du corps de buse, les aiguilles d'obturation (14) présentant chacune, à leur extrémité opposée à la pointe (15), un moyen de couplage (16) qui est couplé à un moyen d'entraînement (28, 29) pour le déplacement des aiguilles d'obturation (14), le ou les éléments en pointe (7) s'appuyant sur un élément formant contre-appui (20) inséré entre le corps de buse (2) et le couvercle résistant à la pression (3), **caractérisé en ce qu'**il comprend les étapes suivantes :
100) démontage du couvercle résistant à la pression (2) ;
200) après l'étape 100), retrait du moyen d'entraînement (28, 29) en une ou plusieurs parties, de façon à découpler l'élément en pointe (7) correspondant du moyen d'entraînement ;
300) après l'étape 200), démontage de l'au moins un ou des plusieurs éléments formant contre-appui (20) et
400) après l'étape 300), démontage du ou des éléments en pointe (7).
